Europäisches Patentamt

European Patent Office

Office européen des brevets

(11) Veröffentlichungsnummer: **0 384 485**
**A1**

## EUROPÄISCHE PATENTANMELDUNG

(21) Anmeldenummer: 90103579.0

(22) Anmeldetag: 23.02.90

(51) Int. Cl.5: **A61C 13/20, B23K 11/08, A61C 7/00**

(30) Priorität: 24.02.89 AT 409/89

(43) Veröffentlichungstag der Anmeldung:
29.08.90 Patentblatt 90/35

(84) Benannte Vertragsstaaten:
**AT BE CH DE FR GB LI LU**

(71) Anmelder: **Winsauer, Heinrich, Dr.**
**Kandlerweg 4**
**A-6020 Innsbruck(AT)**

(72) Erfinder: **Winsauer, Heinrich, Dr.**
**Kandlerweg 4**
**A-6020 Innsbruck(AT)**

(74) Vertreter: **Andrae, Steffen, Dr. et al**
**Patentanwälte Andrae, Flach, Haug**
**Steinstrasse 44**
**D-8000 München 80(DE)**

(54) **Verfahren zum Widerstandsschweissen einander kreuzender Drähte, insbesondere bei der Herstellung von Halte- und Stützelementen in der Orthodontie, sowie Schweissvorrichtung zur Durchführung eines solchen Verfahrens.**

(57) Verfahren zum Widerstandsschweißen einander kreuzender Drähte oder dergleichen unter Verwendung zweier zueinander bewegbarer Schweißelektroden, insbesondere bei der Herstellung von Halte-, Stütz- oder Federelementen in der Orthodontie, wobei einer der beiden Drähte (4) in eine Ausnehmung (3) einer Elektrode (1) eingelegt, der zweite Draht (5) kreuzend darüber gelegt wird und die Elektroden (1, 2) unter Verschmelzung des Kreuzungsbereichs (8) der Drähte (4, 5) gegeneinander gepreßt werden, wobei die Elektroden (1, 2) bis zur Berührung der die Ausnehmung aufweisenden Elektrode (1) mit dem kreuzenden Draht (5) gegeneinander gepreßt werden, wobei durch den zusätzlichen Kontakt der Elektrode (1) zum kreuzenden Draht (5) der Übergangswiderstand für den Schweißstrom sprunghaft so verkleinert wird, daß der Schweißvorgang abgebrochen wird. Die Erfindung betrifft auch eine Schweißvorrichtung mit einer eine nutförmige Ausnehmung aufweisenden Elektrode mit Trennmittelbeschichtung.

Fig. 2

## Verfahren zum Widerstandsschweißen einander kreuzender Drähte, insbesondere bei der Herstellung von Halte- und Stützelementen in der Orthodontie, sowie Schweißvorrichtung zur Durchführung eines solchen Verfahrens

Die Erfindung betrifft ein Verfahren zum Widerstandsschweißen einander kreuzender Drähte oder dergleichen unter Verwendung zweier zueinander bewegbarer Schweißelektroden, insbesondere bei der Herstellung von Halte-, Stütz- oder Federelementen in der Orthodontie, wobei einer der beiden Drähte in eine Ausnehmung einer Elektrode eingelegt, der zweite Draht kreuzend darübergelegt wird und die Elektroden unter Verschmelzung des Kreuzungsbereiches der Drähte gegeneinander gepreßt werden. Außerdem betrifft die Erfindung eine Schweißvorrichtung für die Durchführung eines derartigen Verfahrens zur Herstellung von Halte- und Stützelementen in der Orthodontie.

Aus der DD-PS 40 300 ist ein Elektrodensatz zum elektrischen Verschweißen einander kreuzender Drähte, Stäbe usw. bekannt geworden, wobei eine der beiden Elektroden aus zwei gegeneinander isolierten, verstellbaren Teilen besteht, deren gemeinsame Drahtauflagefläche eine Vertiefung aufweist, in die der Draht einlegbar ist. Die Vertiefung ist vorzugsweise beidseitig von Schrägflächen begrenzt, von denen jede an einem der beiden Teile ausgebildet ist, kann aber auch konkav oder in anderer Weise ausgebildet sein. Sie dient zur besseren Zentrierung des einzulegenden Drahtes.

Die elektrische Widerstandsschweißung einander kreuzender Drähte kann beim Fehlen der idealen Voraussetzungen für die Widerstandsschweißung Probleme hinsichtlich einer gleichbleibenden Verschweißungsqualität mit sich bringen, die auf verschiedenen Ursachen beruhen. Besondere Probleme ergeben sich beispielsweise auf Grund relativ kleiner Dimensionen der zu verschweißenden Drähte, ihrer verschieden großen Durchmesser, schlecht bzw. schwer schweißbarer Materialien usw. Bei der Herstellung kiefer-orthopädischer Elemente (Halte-, Stütz-oder Federelemente) müssen dünne titan-molybdän-legierte Drähte (Edelstahldrähte) miteinander verschweißt werden. Die in der Kieferorthopädie zum Einsatz kommenden Standarddrähte haben dabei Durchmesser (bei runden Drähten) bzw. Querschnittskantenlängen (bei quadratischen Drähten) im Bereich von 0,4064 bis 0,8128 mm, insbesondere von 0,4064 bis 0,635 mm (0.016″ bis 0.032″, insbesondere 0.016″ bis 0.025″). Bei der Herstellung kiefer-orthopädischer Elemente sind somit Drähte mit einer rechteckigen oder quadratischen Querschnittsfläche von etwa 0,1 bis 0,2 mm² mit gleichen oder anders dimensionierten Drähten zu verschweißen, wobei eine hohe Biege- und Torsionsbelastbarkeit gefordert wird. Um die gewünschte Schweißqualität zu erhalten, müssen Stromstärke, Preßdruck und eine sehr kurze Schweißzeit optimiert werden.

Aus der US-PS 3 896 286 ist eine Schweißeinrichtung zur Herstellung kiefer-orthopädischer Elemente bekannt, bei der einer unteren Elektrode eine federbelastete obere Elektrode zugeordnet ist, zwischen denen die zu verschweißenden orthodonten Bauteile eingeklemmt und dann verschweißt werden. Bei dieser Schweißeinrichtung bereitet bereits die Positionierung der Bauteile Schwierigkeiten, und Schweißzeit und Stromstärke müssen individuell gewählt werden. Nur der Preßdruck kann durch Einstellung der Federbeaufschlagung vorgegeben werden. Bei Schweißeinrichtungen dieser Art liegt die Schweißfehlerquote etwa zwischen 10 % und 30 %.

Der Erfindung liegt die Aufgabe zugrunde, ein Verfahren zum Widerstandsschweißen, insbesondere zur Herstellung von Halte-oder Stützelementen in der Orthodontie, sowie eine Vorrichtung zur Durchführung eines solchen Verfahrens zu schaffen, die es ermöglichen, die Schweißqualität bei der Herstellung von "problematischen" Schweißverbindungen, insbesondere zwischen dünnen Drähten, zu verbessern.

Diese Aufgabe wird bei einem Verfahren zum Widerstandsschweißen einander kreuzender Drähte oder dergleichen unter Verwendung zweier zueinander bewegbarer Schweißelektroden, insbesondere bei der Herstellung von Halte-, Stütz- oder Federelementen in der Orthodontie, wobei einer der beiden Drähte in eine Ausnehmung einer Elektrode eingelegt, der zweite Draht kreuzend darübergelegt wird und die Elektroden unter Verschmelzung des Kreuzungsbereichs der Drähte gegeneinander gepreßt werden, dadurch gelöst, daß die Elektroden bis zur Berührung der die Ausnehmung aufweisenden Elektrode und des kreuzenden Drahtes gegeneinander gepreßt werden, wobei durch den zusätzlichen Kontakt der Elektrode zum kreuzenden Draht der Übergangswiderstand für den Schweißstrom sprunghaft so verkleinert wird, daß der Schweißvorgang abgebrochen wird.

Die Aufgabe wird ferner durch eine Schweißvorrichtung zum Widerstandsschweißen einander kreuzender Drähte zur Herstellung von Halte-,Stützoder Federelementen in der Orthodontie mit zwei zueinander bewegbaren Schweißelektroden gelöst, wobei mindestens eine der beiden Schweißelektroden mindestens eine Ausnehmung aufweist, in die einer der beiden Drähte einlegbar ist, und daß die Schweißelektroden eine Trennmittelbeschichtung der Kontaktflächen zu den Drähten aufweisen.

Vorteilhafte Ausgestaltungen sind den jeweiligen Unteransprüchen zu entnehmen.

Bei der Durchführung des erfindungsgemäßen Verfahrens werden somit die Elektroden bis zur Berührung der die nutförmig ausgebildete Ausnehmung aufweisenden flachen Elektrode mit dem kreuzenden Draht gegeneinander gepreßt, wobei durch den zusätzlichen Kontakt der Elektrode zum kreuzenden Draht der Übergangswiderstand für den Schweißstrom sprunghaft so verkleinert wird, daß der Schweißvorgang abgebrochen wird. Der Schweißvorgang wird somit durch einen durch den zweiten, kreuzenden Draht gebildeten Anschlag begrenzt, so daß nur eine ausreichende Stromstärke und ein ausreichender Preßdruck vorgegeben werden müssen, jedoch weder auf deren genaue Einstellung noch auf eine Einhaltung einer genauen Schweißzeit geachtet werden muß. Bei beiden Drähten wird nur der unmittelbare Berührungsbereich bis zu einer Tiefe aufgeschmolzen, die durch die Anlage der Elektrode am kreuzenden Draht bestimmt wird, so daß eine tiefer greifende strukturelle und eigenschaftsverschlechternde Veränderung der Schweißstelle vermieden wird. Der definierte Zusammenbruch des Schweißvorgangs stellt die gleichbleibende Schweißgüte sicher.

Die Tiefe der Ausnehmung liegt zwischen einem und drei Viertel, bevorzugt zwischen der Hälfte und zwei Drittel der Dicke des einzulegenden Drahtes. Werden verschieden dicke Drähte miteinander verschweißt, so ist es von Vorteil, den dünneren Draht in die Ausnehmung der Elektrode einzulegen. Unter Berücksichtigung der in der Orthodontie verwendeten Standard-Drahtstärken ergeben sich somit Ausnehmungstiefen im Bereich von 0,10 bis 0,61 mm, vorzugsweise von 0,10 bis 0,48 mm. Besonders bevorzugt sind dabei Ausnehmungstiefen in einem Bereich von 0,2 bis 0,35 mm. Für die Festlegung der Tiefe der Ausnehmung ist dabei auch die Dickendifferenz zwischen den beiden Drähten mitbestimmend, da es sich gezeigt hat, daß eine besonders hohe gleichbleibende Schweißgüte dann erreichbar ist, wenn die Tiefe der Ausnehmung der Größe der Dickendifferenz der Drähte angepaßt ist. Es ist daher günstig, wenn verschiedene, austauschbare Schweißelektroden zur Verfügung stehen.

Mit der Berührung des kreuzenden Drahtes wird die Übertrittsfläche für den Schweißstrom sprunghaft auf ein Mehrfaches der Übertrittsfläche im Kreuzungsbereich vergrößert. Je nach Schweißgerät kann daher die Verringerung des Übergangswiderstandes auf verschiedene Weise den Schweißvorgang abbrechen. So sieht eine bevorzugte Vorgangsweise, die etwa die Verwendung des aus der US-PS 3 896 286 bekannten Schweißgerätes erlaubt, vor, daß durch den verringerten Übergangswiderstand die Stromstärke des spezifischen Schweißstromes unter eine ein weiteres Aufschmelzen des Kreuzungsbereiches der Drähte bewirkende Größe fällt.

Anstelle der Verringerung des spezifischen Schweißstromes, also der Stromdichte pro Flächeneinheit, könnte aber auch die Spannung des Schweißstromes konstant gehalten werden, so daß bei Verkleinerung des Widerstandes durch die Vergrößerung der Übertrittsfläche ein Schweißstrom von wesentlich höherer Stärke zu fließen beginnt, der einen vorgeschalteten Strombegrenzer den Stromkreis unterbrechen läßt.

Die Anlage der Elektrode am kreuzenden Draht verbessert außerdem auch die Wärmeabfuhr aus dem Schweißbereich und bewirkt eine Ausrichtung der Drahtabschnitte.

Zur Erhöhung der Lebensdauer von insbesondere aus Kupfer oder einer Kupferlegierung bestehenden Elektroden ist es erfindungsgemäß bevorzugt vorgesehen, daß die Schweißelektroden eine Trennmittelbeschichtung der Kontaktflächen zu den Drähten aufweisen.

Diese kann beispielsweise graphithaltig sein, wenn Drähte aus einer Titan und Molybdän enthaltenden Legierung, insbesondere Edelstahllegierung, zu orthodonten Halte-, Stütz- oder Federelementen verschweißt werden.

Nachfolgend wird die Erfindung anhand von Figuren noch näher erläutert.

Es zeigen:

Figur 1 einander kreuzende Drähte rechteckigen Querschnitts, die zwischen zwei Schweißelektroden angeordnet sind, unmittelbar vor Beginn des Schweißvorgangs;

Figur 2 die Endstellung nach Annäherung der beiden Schweißelektroden in dem Moment, in dem es zur Unterbrechung des Schweißvorgangs kommt; und

Figur 3 eine Draufsicht auf ein zu verschweißendes orthodontes Element mit einer besonders gestalteten Ausführungsform einer geeigneten Schweißelektrode.

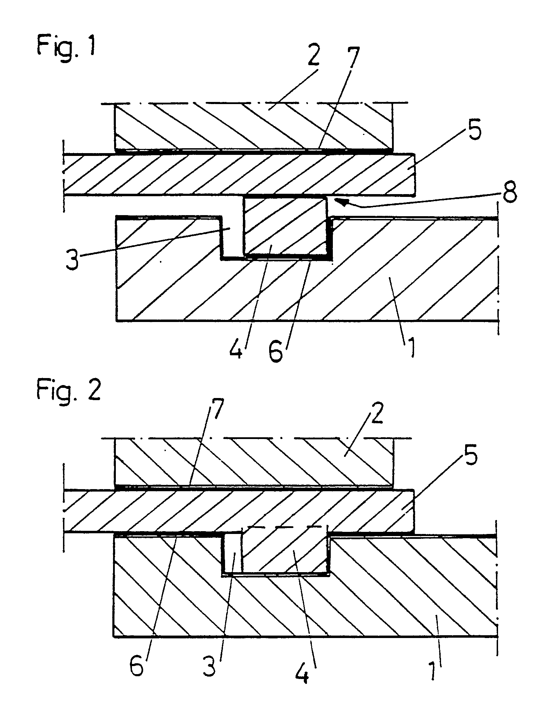

Für die Widerstandsschweißung einander in einem beliebigen Winkel kreuzender Drähte 4, 5 bzw. Drahtabschnitte werden diese zwischen einem Paar von Schweißelektroden 1, 2 angeordnet, von denen die flache Schweißelektrode 1 eine Ausnehmung 3, beispielsweise gemäß Figur 1 und 2 in Form einer Nut, aufweist. Sind die beiden Schweißelektroden 1, 2 übereinander angeordnet, so weist vorzugsweise die untere Schweißelektrode (die Fußelektrode) die nutförmige Ausnehmung 3 auf, so daß beim Einlegen eines Drahtes 4 in die Ausnehmung 3 dieser seitlichen Halt findet, wodurch die Handhabung erleichtert wird. Die Tiefe der Ausnehmung 3 liegt bei etwa zwei Drittel der Dicke des eingelegten Drahtes, bei Verwendung von Drähten für die Herstellung kiefer-orthopädischer Elemente somit im oben angegebenen Tiefenbereich, vorzugsweise im Bereich von 0,2 bis 0,35 mm. Sobald der kreuzende Draht 5 darübergelegt ist, kann mit dem Schweißvorgang begonnen werden. Auf Grund des Übergangswiderstands der im Kreuzungsbereich 8 gegebenen Berührungsfläche wird dort jeder der beiden Drähte durch den Schweißstrom aufgeschmolzen, so daß die Elektroden 1, 2 durch den Preßdruck einander angenähert werden können. Die Annäherungsbewegung wird durch einen Anschlag begrenzt, der, wie aus Figur 2 ersichtlich ist, vom kreuzenden Draht 5 gebildet wird, und entspricht dem Überstand des in die Ausnehmung 3 eingelegten Drahtes 4, also etwa einem Drittel seiner Dicke. Die Berührungsfläche vergrößert sich im Augenblick der Anlage sprunghaft, was die ebenso sprunghafte Verringerung des Übergangswiderstandes und der Stromdichte pro Flächeneinheit bewirkt. Dies beendet den Schweißvorgang, da die spezifische Stromsstärke nicht mehr zum weiteren Aufschmelzen ausreicht. Eine exakte Einstellung des Schweißstromes und vor allem der Schweißzeit erübrigt sich. Durch die vergrößerte Kontaktfläche zwischen dem Draht 5 und der Elektrode 1 werden gleichzeitig eine verbesserte Wärmeableitung erzielt und die Schweißstelle ausgerichtet.

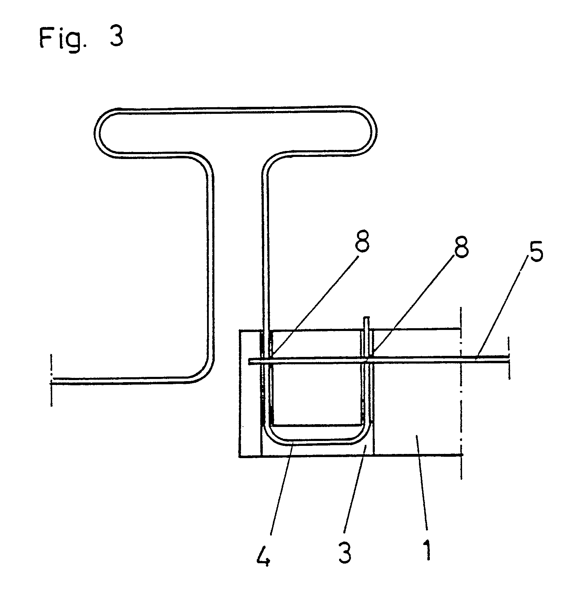

Figur 3 zeigt ein Ausführungsbeispiel einer Schweißelektrode für die Herstellung eines orthodonten Elementes, bei dem der Draht 4 im Endabschnitt U-förmig gebogen ist. Mit dem zu verbindenden kreuzenden Draht 5 ergeben sich somit zwei Kreuzungsbereiche 8. Eine für die erfindungsgemäße Verschweißung geeignete Elektrode 1 weist eine Ausnehmung 3 auf, die aus zwei parallelen Nuten und einem Verbindungsbereich zur Aufnahme des gebogenen Drahtteiles besteht.

Die Schweißelektroden 1, 2 bestehen insbesondere aus Kupfer oder einer Kupferlegierung, wobei ihre Kontaktflächen mit einer Trennmittelbeschichtung 6, 7 versehen sind, vorzugsweise einer graphithaltigen Trennmittelbeschichtung, um die Elektrodenabnützung zu verringern.

Es ist auch denkbar, beide Schweißelektroden 1, 2 mit einer Ausnehmung 3 zu versehen, so daß gegebenenfalls bei Abbruch des Schweißvorganges jede Elektrode 1, 2 am jeweils anderen Draht 5,4 anliegt. In diesem Falle ist es günstig, eine Elektrode verdrehbar anzuordnen, so daß der Kreuzungswinkel der beiden Ausnehmungen 3 eingestellt werden kann.

Die geometrische Lage der nutförmig ausgebildeten Ausnehmung 3 in der Elektrode 1 wird von den praktischen Erfordernissen bestimmt. Sie kann rechtwinklig oder auch schräg zur Längsachse der Elektrodenoberfläche angeordnet sein, wobei eine schräge Anordnung sich für die Herstellung von Halte- und Stützelementen in der Orthodontie als besonders vorteilhaft erwiesen hat.

## Ansprüche

1. Verfahren zum Widerstandsschweißen einander kreuzender Drähte oder dergleichen unter Verwendung zweier zueinander bewegbarer Schweißelektroden, insbesondere bei der Herstellung von Halte-, Stütz- oder Federelementen in der Orthodontie, wobei einer der beiden Drähte (4) in eine Ausnehmung (3) einer Elektrode (1) eingelegt, der zweite Draht (5) kreuzend darüber gelegt wird, und die Elektroden (1, 2) unter Verschmelzung des Kreuzungsbereiches (8) der Drähte (4, 5) gegeneinander gepreßt werden, **dadurch gekennzeichnet,** daß die Elektroden (1, 2) bis zur Berührung der die Ausnehmung (3) aufweisenden Elektrode (1) mit dem kreuzenden Draht (5) gegeneinander gepreßt werden, wobei durch den zusätzlichen Kontakt der Elektrode (1) zum kreuzenden Draht (5) der Übergangswiderstand für den Schweißstrom sprunghaft so verkleinert wird, daß der Schweißvorgang abgebrochen wird.

2. Verfahren nach Anspruch 1, **dadurch gekennzeichnet,** daß durch den verringerten Übergangswiderstand die Stromstärke des spezifischen Schweißstromes unter eine ein weiteres Aufschmelzen des Kreuzungsbereiches der Drähte (4, 5) bewirkende Größe fällt.

3. Schweißvorrichtung zum Widerstandsschweißen einander kreuzender Drähte bei der Herstellung von Halte-, Stütz- oder Federelementen in der Orthodontie mit zwei zueinander bewegbaren Schweißelektroden, **dadurch gekennzeichnet,** daß mindestens eine der beiden Schweißelektroden (1, 2) mindestens eine Ausnehmung (3) aufweist, in die einer der beiden Drähte (4) einlegbar ist, und daß die Schweißelektroden (1, 2) eine Trennmittelbeschichtung (6, 7) der Kontaktflächen zu den Drähten (4, 5) aufweisen.

4. Schweißvorrichtung nach Anspruch 3, **dadurch gekennzeichnet,** daß die mindestens eine Ausnehmung (3) in der unteren Elektrode (1) eines übereinander angeordneten Elektrodenpaares ausgebildet ist.

5. Schweißvorrichtung nach Anspruch 3 oder 4, **dadurch gekennzeichnet,** daß die Ausnehmung (3) eine in der Oberfläche der flach ausgebildeten Elektrode (1) ausgebildete nutförmige Ausnehmung ist.

6. Schweißvorrichtung nach einem der Ansprüche 3 bis 5, **dadurch gekennzeichnet,** daß die Tiefe der Ausnehmung (3) im Bereich von einem Viertel bis zu drei Vierteln der Dicke des in die Ausnehmung einzulegenden, zu verschweißenden Drahtes (4) liegt.

7. Schweißvorrichtung nach Anspruch 6, **da-**

**durch gekennzeichnet**, daß die Tiefe der Ausnehmung (3) im Bereich von einem Drittel bis zu zwei Dritteln der Dicke eines Drahtes mit rundem oder quadratischem Querschnitt mit einer Querschnittsfläche von 0,1 bis 0,2 mm² liegt.

8. Schweißvorrichtung nach einem der Ansprüche 3 bis 7, **dadurch gekennzeichnet**, daß die Tiefe der Ausnehmung (3) im Bereich von 0,2 bis 0,35 mm liegt.

9. Schweißvorrichtung nach einem der Ansprüche 3 bis 8, **dadurch gekennzeichnet**, daß die Schweißelektroden aus Kupfer oder einer Kupferlegierung bestehen und die Trennmittelbeschichtung (6, 7) graphithaltig ist.

EP 0 384 485 A1

Fig. 1

Fig. 2

Fig. 3

# EUROPÄISCHER RECHERCHENBERICHT

## EINSCHLÄGIGE DOKUMENTE

EP 90103579.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A - 2 313 792</u> <br> (ORALTECHNIC ANSTALT) <br> * Patentanspruch 1 * <br> -- | 1 | A 61 C 13/20 <br> B 23 K 11/08 <br> A 61 C 7/00 |
| A | <u>GB - A - 308 581</u> <br> (MAURICE CHARLIER) <br> * Patentanspruch 1 * <br> -- | 1 | |
| A | <u>DE - A - 2 347 770</u> <br> (UNIVERSITY OF SHEFFIELD et al.) <br> * Patentanspruch 1 * <br> -- | 1 | |
| D,A | <u>DD - A - 40 300</u> <br> (DIPL.-ING. WALTER HUFNAGEL) <br> * Gesamt * <br> -- | 1,3 | |
| D,A | <u>US - A - 3 896 286</u> <br> (CHRISTOPHER JOHN MINORS) <br> * Patentanspruch 1 * <br> ---- | 1,3 | |

RECHERCHIERTE
SACHGEBIETE (Int. Cl.⁵)

A 61 C
B 23 K

Der vorliegende Recherchenbericht wurde für alle Patentansprüche erstellt.

| Recherchenort <br> WIEN | Abschlußdatum der Recherche <br> 20-04-1990 | Prüfer <br> HEIN |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82